# EUROPEAN PATENT APPLICATION

(11) **EP 4 141 486 A1**
(43) Date of publication of application: **01.03.2023**
(21) Application number: 21194185.1
(22) Date of filing: 31.08.2021
(51) Int. Cl.: G01S 15/96, G01S 15/86, G01S 15/89, A01K 61/95

(54) **DEVICE AND METHOD FOR FISH DETECTION**

(71) Applicant: FURUNO ELECTRIC CO., LTD., Nishinomiya-City, Hyogo 662-8580 (JP)
(72) Inventor: IKEGAMI, Atsushi, Nishinomiya-city, 662-8580 (JP)
(74) Representative: CSY London

(57) **Abstract**

A fish detection device (50) including an underwater camera system (103), an underwater ultrasonic system (105), a first fish counting module (101a), and a second fish counting module (101b) is provided. The underwater camera system (103) is configured to acquire an image of one or more fish swimming underwater. The underwater ultrasonic system (105) is configured to acquire echo data of the one or more fish. The first fish counting module (101a) is configured to detect and count fish in the image as a first count value. The second fish counting module (101b) is configured to detect and count fish in the echo data in an occlusion region (R10) as a second count value, where an occlusion is caused by the detected one or more fish in the image.

## Description

The present invention mainly relates to a fish detection device for detecting a fish swimming in the water, a fish cage system equipped with the fish detection device, a fish detection method for detecting a fish swimming in the water, and a program for making a computer execute a function for detecting a fish swimming in water.

Conventionally, different apparatuses are used to detect fish swimming in water, the number of fish passing through a predetermined path, and the biomass (gross weight) of the fish. For example, a fishfinder with a camera, where the camera is installed facing upward to the predetermined path in which one or more fish migrate, may be used for such detections. The one or more fish passing through the predetermined path are detected by the fishfinder, and a count of the one or more fish passing through the predetermined path is obtained from the detection result. Further, based on an image obtained by the camera, the size (height and fork length) of each fish of the one or more fish that have passed through the path is detected, and the average weight of the one or more fish is calculated. The fish counting result obtained at the count stage is multiplied by the average weight of the one or more fish to calculate the biomass (gross weight) of one or more fish that have passed through the path. Patent document 1 discloses such a device. As used herein, the patent document 1 may be EP3316220. However, in the patent document 1 since the fishfinder is used for detecting one or more fish, it is difficult to accurately detect and count the one or more fish that have passed through the path. Such a problem can be solved by using a high-resolution three-dimensional sonar instead of the fishfinder. However, the high-resolution three-dimensional sonar is expensive, resulting in an increase in cost of the overall apparatus.

An object of the present invention is to provide a fish detection device, a fish cage system, a fish detection method, and a program capable of detecting and counting fish swimming in water with high accuracy while suppressing an increase in cost.

A first aspect of the invention relates to a fish detection device. The fish detection device includes: an underwater camera system configured to acquire an image of one or more fish swimming underwater; an underwater ultrasonic system configured to acquire echo data associated with the one or more fish swimming underwater; a first fish counting module configured to detect and count the one or more fish in the image as a first count value; and a second fish counting module configured to detect and count the one or more fish in the echo data in an occlusion region as a second count value, where the occlusion is caused by the detected one or more fish in the image.

According to the fish detection device, one or more fish included in the images acquired by the underwater camera system are detected and counted by the first fish counting module. A fish that cannot be detected in these images, that is, the fish hidden behind the one or more fish in these images (occlusion region fish) are detected and counted by the underwater ultrasonic system using the echo data acquired by the second fish counting module. Therefore, the one or more fish swimming in water can be detected and counted with high accuracy.

Here, since the underwater camera system can obtain a high-precision image even if it is relatively inexpensive, the first fish counting module can detect and count the one or more fish in the image with high precision. In addition, since the second fish counting module only needs to be able to additionally detect whether or not there is a fish present in the occlusion region, the underwater ultrasonic system need not be configured to provide high-resolution echo data in three dimensions. Therefore, using the fish detection device, it is possible to detect and count the one or more fish swimming in the water with high accuracy while suppressing the increase in cost.

The fish detection device of the present embodiment may further comprise a fish tracking module configured to track each fish of the one or more fish in the image and a previously acquired image from the underwater camera system, and detect a swimming direction of each fish of the one or more fish. In this case, the first fish counting module may be configured to increase or decrease the first count value based on the swimming direction of the one or more fish.

For example, the first fish counting module may be configured to increase the first count value when at least one fish from the one or more fish is tracked as swimming in a first range of directions and to decrease the first count value when the at least one fish from the one or more fish is tracked as swimming in a second range of directions, different from the first range of directions.

According to this arrangement, for example, if at least one fish that swam in the first direction reversed and then swam in the second direction, the increase in the first count value that occurred when the fish was tracked as swimming in the first range of directions is canceled on tracking the fish as swimming in the second range of directions. As a result, this fish does not get counted. Therefore, the fish remaining after moving in the first direction can be accurately counted.

The fish detection device of the present embodiment may further comprise a trained processing module configured to identify corresponding fish species for each of the one or more fish detected by the first fish counting module based on the image comprising the detected one or more fish, where the first fish counting module is configured to increase or decrease the first count value of the detected one or more fish based on the fish species. The trained processing module is further configured to output fish species of the one or more fish, detected by the first fish counting module when inputted with the image comprising the detected one or more fish. In this case, the first fish counting module may be configured to count the detected one or more fish based on the fish species.

According to this configuration, the first fish counting module can count fish for each fish species. Thus, for example, from the count value for each fish species detected by the first fish counting module, the ratio of each fish species to the count value for all fish species detected by the first fish counting module can be obtained. Further, by multiplying this ratio by the second count value in the second fish counting module, the count value for each fish species can be calculated based on the count result in the second fish counting module. The total count result for each fish species can be calculated by adding the count value for each fish species based on the count result (or the first count value) of the first fish counting module to the count value for each fish species based on the count result (or the second count value) of the second fish counting module.

The fish detection device of the present embodiment may further comprise: a fish size calculating module configured to calculate a fish size corresponding to each fish of the one or more fish detected by the first fish counting module based on the image comprising the detected one or more fish; and a fish biomass calculating module configured to calculate fish biomass based on the first count value, the second count value, and the fish size.

According to this configuration, the biomass (gross weight) of the detected and counted one or more fish can be obtained.

The fish detection device of the present embodiment may further include an occlusion region calculating module configured to calculate coordinates of a three-dimensional region as the occlusion region. In this case, the second fish counting module may detect fish comprised within the three-dimensional region.

Also, in an exemplary fish detection device, the underwater camera system may comprise at least one camera.

For example, the underwater camera system may be configured to include a stereo camera.

The underwater ultrasonic system may also be configured to include a transducer comprising one or more reception transducer elements arranged in a single channel.

Alternatively, the underwater ultrasonic system may include a transducer comprising a plurality of reception transducer elements arranged in a plurality of channels, and the second fish counting module may be configured to detect the one or more fish two-dimensionally or three-dimensionally.

Preferably, a lens of the underwater camera system and a transducer of the underwater ultrasonic system face substantially in the same direction. Thus, an imaging region covered by the lens and an ultrasonic directivity region covered by the transducer can be easily matched. Therefore, the fish which cannot be detected by the image from the underwater camera system can be appropriately detected by the echo data from the underwater ultrasonic system.

In this case, the same direction is, for example, the horizontal direction.

A second aspect of the invention relates to a fish cage system. The fish cage system according to this embodiment comprises the fish detection device according to the first embodiment, and a path connecting a first fish cage and a second fish cage. The one or more fish migrate in the path from the first fish cage to the second fish cage, and the fish detection device counts the one or more fish migrating in the path.

According to the fish cage system in the present embodiment, the one or more fish moving from the first fish cage to the second fish cage can be detected and counted with high accuracy.

A third aspect of the present invention relates to a fish detection method. The fish detection method comprises acquiring an image of one or more fish swimming underwater, acquiring echo data of the one or more fish swimming underwater, detecting and counting fish in the image as a first count value, and detecting and counting fish in the echo data in an occlusion region as a second count value, where the occlusion is caused by the detected one or more fish in the image.

According to an embodiment, the fish detection method provides the same effect as that of the fish detection device.

A fourth aspect of the present invention relates to a non-transitory computer-readable medium having stored thereon computer-executable instructions which, when executed by a computer, cause the computer to acquire an image of one or more fish swimming underwater, to acquire echo data of the one or more fish swimming underwater, to detect and count fish in the image as a first count value, and to detect and count fish in the echo data in an occlusion region as a second count value, where the occlusion is caused by the detected one or more fish in the image.

According to this fourth embodiment, the same effect as that of the fish detection device according to the first embodiment can be obtained.

As described above, according to the present invention, it is possible to provide a fish detection device, a fish cage system, a fish detection method, and a program capable of detecting and counting fish swimming in water with high accuracy while suppressing an increase in cost.

The effect or significance of the present invention will be further clarified by the description of the following embodiments. However, the embodiments shown below are only exemplary embodiments of the present invention, and the present invention is not limited to the embodiments described below.
FIG. 1 is a plan view illustrating a configuration of a fish cage system according to an embodiment;
FIG. 2 is a side view illustrating a configuration of a fish cage system according to an embodiment;
FIG. 3 is a cross-sectional view of a configuration of a fish cage system according to an embodiment;
FIG. 4 is a diagram illustrating a configuration of a sensor unit of a detection unit according to an embodiment;
FIG. 5 is a block diagram illustrating a configuration of a fish detection device according to an embodiment;
FIG. 6(a) is a flow chart illustrating a method for detecting and counting fish passing through detection region D1 according to an embodiment;
FIG. 6(b) is a flowchart illustrating a method for biomass calculation according to an embodiment;
FIG. 7 is a diagram schematically illustrating an image acquired by an underwater camera system according to an embodiment;
FIG. 8 is a flow chart illustrating a method for an image-based fish counting according to an embodiment;
FIG. 9 is a diagram schematically illustrating an example of a fish counting process based on an image according to an embodiment;
FIG. 10 is a diagram schematically illustrating a state in which occlusion is caused by a fish according to an embodiment;
FIGS. 11 (a), 11(b) and 11(c) are views illustrating an example of different configurations of transducer elements disposed in a transducer according to an embodiment;
FIG. 12 is a diagram schematically illustrating a fish detection method using the transducer of FIG. 11 (b) according to an embodiment;
FIG. 13 is a flowchart illustrating an example of a first method for fish counting based on echo data according to an embodiment;
FIG. 14 is a flowchart illustrating an example of a second method for fish counting based on echo data according to an embodiment; and
FIG. 15 is a flowchart illustrating an example of a third method for fish counting based on echo data according to an embodiment.

Embodiments of the present invention will be described below with reference to the drawings. For convenience, the drawings are appropriately marked with mutually orthogonal XYZ axes. The X-axis direction and the Y-axis direction are horizontal, and the Z-axis direction is vertical. The positive X-axis direction is a direction in which a first fish cage and a second fish cage line up, that is, a direction in which a fish moves from the first fish cage to the second fish cage.

In the following embodiments, the invention is applied to a fish cage system, where one or more fish carried in a carrier ship are transferred to a fish cage. However, the present invention is not limited in any way to the following embodiments.

### <Fish cage system>

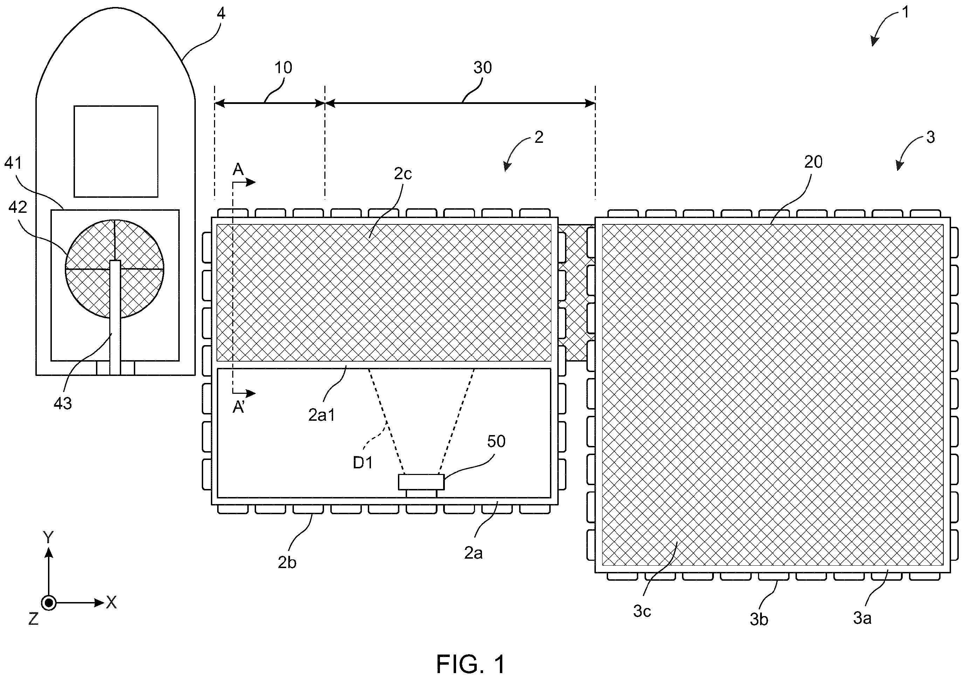

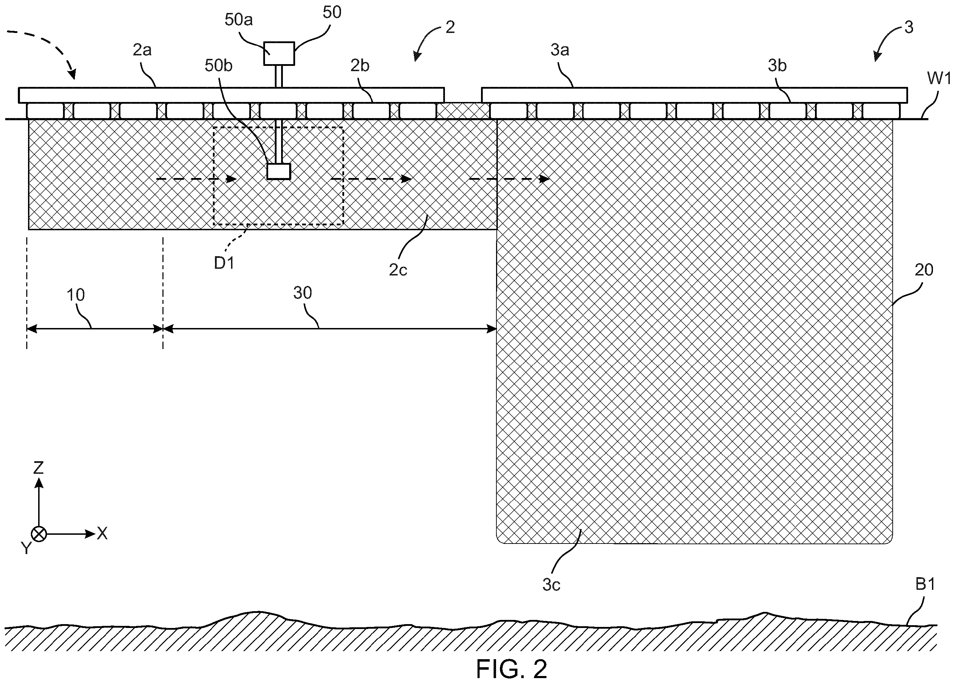

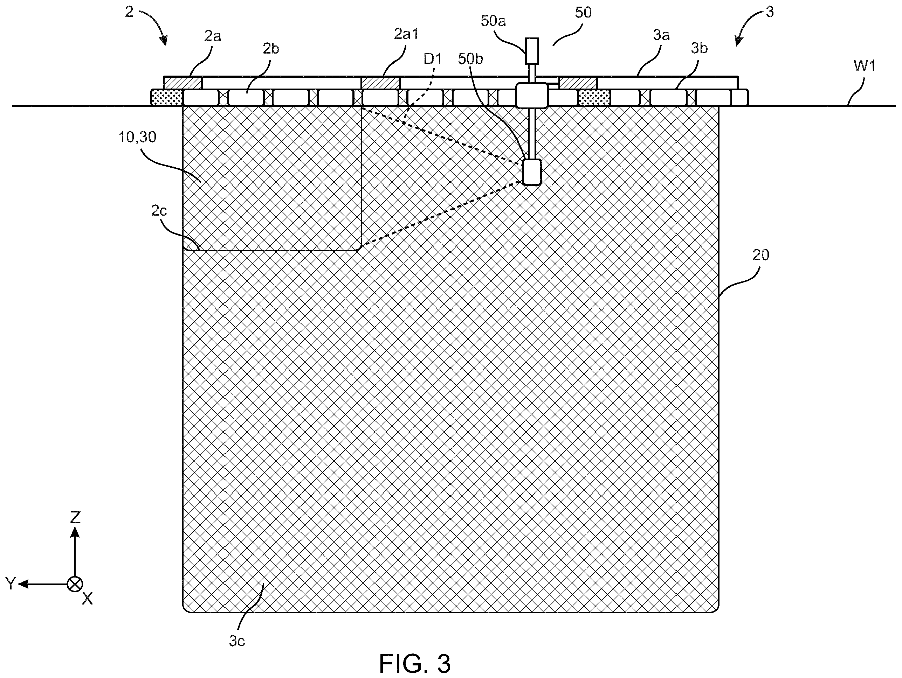

FIGS. 1 and 2 are a plan view and a side view respectively, illustrating a configuration of a fish cage system 1. FIG. 3 is a cross-sectional view of the fish cage system 1 of FIG. 1 taken at the position A-A '.

Referring to FIGS. 1-3, the fish cage system 1 includes two rafts 2, 3 installed at sea. The rafts 2 and 3 are secured to the bottom B1 by a rope or the like (not shown) so as to restrict horizontal movement. The rafts 2 and 3 are connected to each other by a rope or the like (not shown). The rafts 2, 3 are arranged in the X-axis direction so that one side faces the other with a predetermined gap.

The raft 2 is provided with a raft frame 2a made of any of wood, a metal pipe, or the like. The raft 2 inlcudes a plurality of floats 2b for floating the raft frame 2a on the sea, and a net 2c for accommodating and guiding fish. The raft frame 2a has a substantially rectangular shape in plan view. The plurality of floats 2b is installed on the lower surface of the raft frame 2a along the outer periphery of the raft frame 2a. The raft frame 2a floats on sea surface W1 by the buoyancy of the floats 2b.

The raft frame 2a has a beam part 2a1 connecting a pair of opposite sides at a substantially central position. The region inside the raft frame 2a is divided into two regions in the Y-axis direction by the beam part 2a1. The net 2c is disposed in the region on the positive side of the Y-axis. As shown in FIG. 3, the net 2c hangs in a rectangular shape to a predetermined depth. The upper end of the net 2c extends to the height of the upper surface of the raft frame 2a.

FIG. 3 further illustrates, the net 2c has two side surfaces facing in the Y-axis direction, a bottom surface connecting the lower ends of the two side surfaces, and a side surface connecting the two side surfaces and the end part on the X-axis negative side of the bottom surface. The upper surface and the side surface on the X-axis positive side of the region surrounding the net 2c are opened. An end part on the positive side of the X-axis of the net 2c is connected to a net 3c on the side of the raft 3. That is, the net 3c has a rectangular opening formed on a side surface on the negative side of the X-axis. The end portion of the net 2c on the positive side of the X-axis is connected to the outer peripheral portion of the opening. Thus, the region surrounded by the net 2c communicates with the region surrounded by the net 3c through the opening.

The raft 3 is provided with a raft frame 3a made of wood, a metal pipe, or the like, a plurality of floats 3b for floating the raft frame 3a on the sea, and the net 3c for accommodating fish. The raft frame 3a has a substantially rectangular shape in plan view. The plurality of floats 3b is installed on the lower surface of the raft frame 3a along the outer periphery of the raft frame 3a. The raft frame 3a floats on the sea surface W1 by the buoyancy of the floats 3b.

Net 3c is installed in a region inside the raft frame 3a. As shown in FIG. 3, the net 3c hangs in a rectangular shape to a predetermined depth. The upper end of the net 3c extends to the height of the upper surface of the raft frame 3a. The net 3c includes two side surfaces facing in the X-axis direction, two side surfaces facing in the Y-axis direction, and a bottom surface, all connected to each other. The region surrounded by the net 3c has an open top. As described above, an opening connected to the net 2c is formed in the side surface of the net 3c on the negative side of the X-axis. As shown in FIG. 2, the net 3c of the raft 3 hangs down in the vicinity of the bottom B1. The bottom surface of the net 2c is positioned higher than the bottom surface of the net 3c.

Returning to FIG. 1, in the fish cage system 1 having the above configuration, a first fish cage 10 is constituted by a region on the X-axis negative side within the region surrounded by the net 2c, and a second fish cage 20 is constituted by the region surrounded by the net 3c. A path 30 for connecting the first fish cage 10 and the second fish cage 20 is constituted by a region on the positive X-axis side within the region surrounded by the net 2c. One or more fish caught by fishing and the like are transferred to the first fish cage 10. The one or more fish transferred to the first fish cage 10 travel through the path 30 to the second fish cage 20. The one or more fish migrated to the second fish cage 20 are cultured in the second fish cage 20. The fish to be cultured is, for example, yellowtail.

In this case, as shown in FIG. 1, a carrier ship 4 is laterally attached to the negative X-axis side of the raft 2. A fish cage 41 on the carrier ship 4 stores, for example, the one or more fish caught by fishing. The one or more fish housed in the inboard fish cage 41 are transferred from the inboard fish cage 41 to the first fish cage 10 by a net 42 and a crane 43. The one or more fish transferred to the first fish cage 10 travel through the path 30 to the second fish cage 20. This operation is repeated to successively transfer the one or more fish in the inboard fish cage 41 to the second fish cage 20.

In order to determine whether too many fish are accommodated in the first fish cage 10 and the second fish cage 20, a user of the fish cage system 1 may, from time to time, keep track of the number and biomass (gross weight) of the one or more fish transferred from the inboard fish cage 41 to the first fish cage 10 and the second fish cage 20. In addition, after completing the transfer of the one or more fish from inboard fish cage 41 to first fish cage 10 and second fish cage 20, the user of the fish cage system 1 may report to the authorities the number and biomass (gross weight) of new one or more fish transferred to the first fish cage 10 and the second fish cage 20.

For this reason, the fish cage system 1 is further provided with a fish detection device 50 for measuring the number and biomass (gross weight) of the one or more fish transferred to the first fish cage 10 and the second fish cage 20. The details of the fish detection device are illustrated in FIG. 2. Fish detection device 50 includes a control processing unit 50a and a detection unit 50b. The control processing unit 50a and the detection unit 50b are installed on the side of the raft frame 2a on the negative side of the Y-axis. Control processing unit 50a is positioned above sea level W1. The detection unit 50b is arranged in water so that a fish moving along the path 30 can be detected through the side surface of the net 2c on the negative side of the Y-axis. The detection direction of the detection unit 50b is set to the positive Y-axis direction.

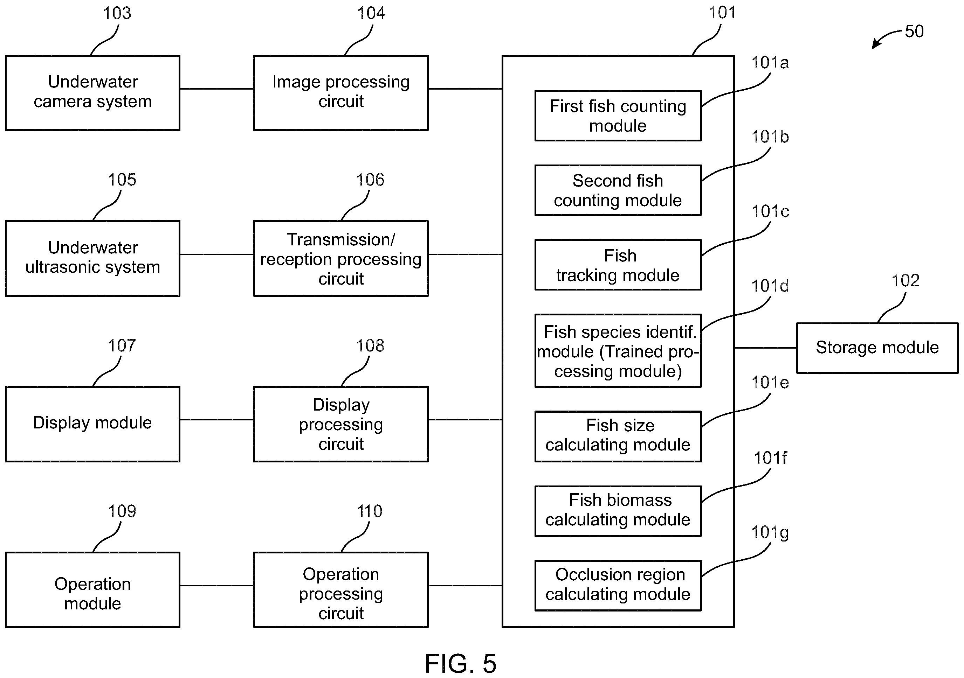

The detection unit 50b includes an underwater camera system 103 and an underwater ultrasonic system 105 (which will be described in detail later in FIG. 5). The underwater camera system 103 images a detection region D1, and the underwater ultrasonic system 105 transmits ultrasonic waves to the detection region D1, receives the reflected waves, and acquires echo data. The detection region D1 includes substantially the entire range in the height direction of the path 30.

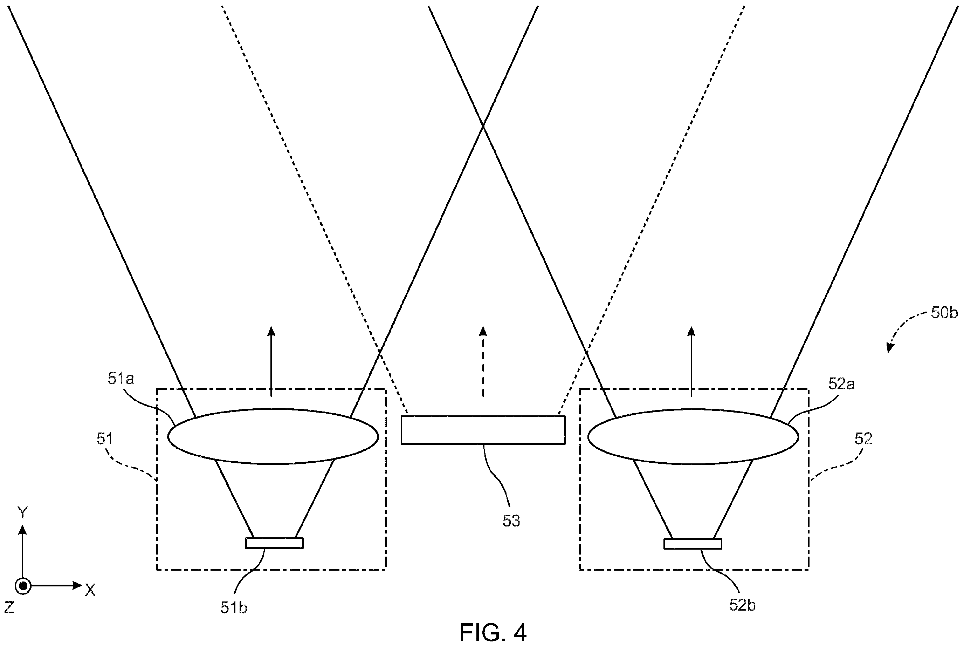

FIG. 4 is a diagram illustrating a configuration of a sensor unit of the detection unit 50b according to an embodiment.

The detection unit 50b includes two cameras 51, 52, and a transducer 53. The two cameras 51, 52 are included in the underwater camera system 103 and the transducer 53 is included in the underwater ultrasonic system 105. The two cameras 51 and 52 are arranged side by side in the X-axis direction at a predetermined interval. That is, the two cameras 51 and 52 constitute a stereo camera. The two cameras 51 and 52 have parallax corresponding to the positional deviation in the X-axis direction. By this parallax, the distance to the same object included in each captured image of the two cameras 51 and 52 can be calculated.

The cameras 51 and 52 are respectively provided with lenses 51a and 52a having a predetermined viewing angle, and image sensors 51b and 52b for forming an image of an imaged region by the lenses 51a and 52a. Each of the lenses 51a and 52a need not necessarily be constituted by one lens but may be constituted by combining a plurality of lenses. The image sensors 51b and 52b are color image sensors such as CMOS image sensors and CCD.

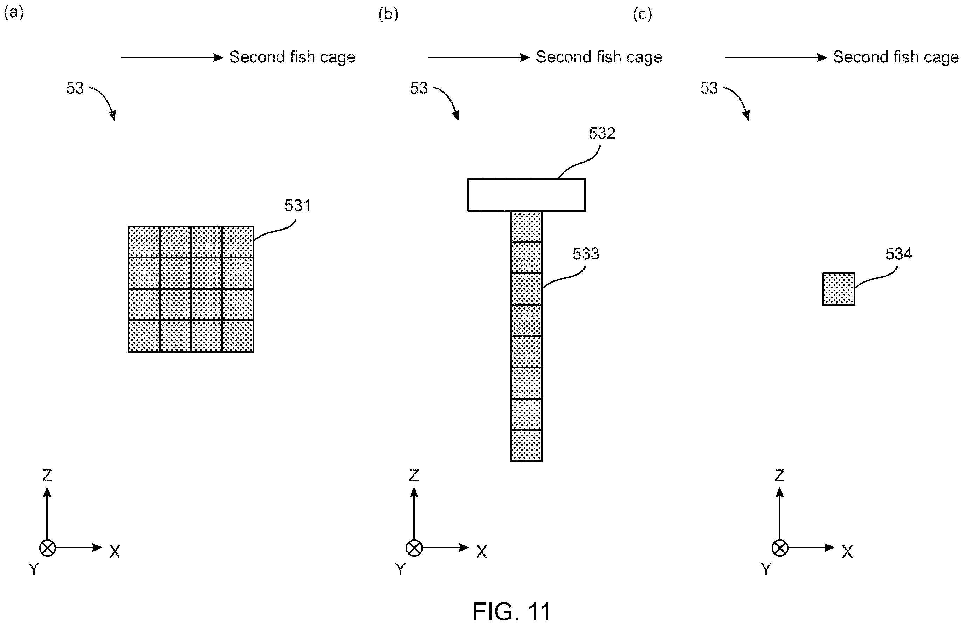

The transducer 53 is arranged between the two cameras 51 and 52. The transducer 53 need not necessarily be disposed between the two cameras 51, 52, but may be disposed around the cameras 51, 52, such as laterally on one camera. The transducer 53 includes a transmission transducer element (ultrasonic transducer) that transmits an ultrasonic wave, and a reception transducer element (ultrasonic transducer) that receives the reflected wave. The transmission transducer element and the reception transducer element may be constituted of a common transducer element. The reception transducer element may be arranged in a single channel or arranged in a plurality of channels. An example of the configuration of the transducer 53 will be described later with reference to FIGS. 11 (a) to 11 (c).

The lenses 51a, 52a and the transducer 53 face substantially the same direction. More specifically, the direction in which the lenses 51a, 52a and the transducer 53 are directed is a horizontal direction. That is, as shown in FIG. 4, the lenses 51a and 52a and the transducer 53 are oriented in a direction substantially perpendicular to the side surface of the net 2c constituting the path 30 on the negative side of the Y-axis. The lenses 51a and 52a and the transducer 53 are disposed substantially at the center in the height direction of the net 2c. Thus, the detection region D1 can be imaged smoothly by the cameras 51 and 52, and the transmission and reception of ultrasonic waves to and from the detection region D1 can be performed smoothly by the transducer 53.

### <Fish detection device>

FIG. 5 is a block diagram illustrating a configuration of the fish detection device 50 according to an embodiment.

The fish detection device 50 includes a control module 101, a storage module 102, the underwater camera system 103, an imaging processing circuit 104, the underwater ultrasonic system 105, a transmission/reception processing circuit 106, a display module 107, a display processing circuit 108, an operation module 109, and an operation processing circuit 110. The configuration of FIG. 5 is arranged in the control processing unit 50a except for the configuration of the sensor unit shown in FIG. 4.

The control module 101 includes an arithmetic processing circuit such as a CPU (Central Processing Unit) and executes control processing for fish detection by a program stored in the storage module 102. The storage module 102 includes a storage medium such as a ROM (Read Only Memory), a RAM (Random Access Memory), and a hard disk. A program for realizing the processing of fish detection is stored in the storage module 102.

The underwater camera system 103 includes the cameras 51 and 52 (Stereo camera system) shown in FIG. 4. The imaging processing circuit 104 drives image sensors 51b, 52b of cameras 51, 52 in accordance with control from the control module 101 to acquire an image of an imaging region (detection region D1). The imaging processing circuit 104 outputs the acquired image to the control module 101.

The underwater ultrasonic system 105 includes the transducer 53 shown in FIG. 4. In response to receiving a control signal from the control module 101, the transmission/reception processing circuit 106 outputs a transmission signal for transmitting the ultrasonic wave to the transducer 53. The transmission/reception processing circuit 106 generates echo data by processing a reception signal outputted by receiving the reflection wave of the ultrasonic wave transmitted thereto by the transducer 53, and outputs the generated echo data to the control module 101.

The display module 107 is provided with a display device such as a liquid crystal display. The display processing circuit 108 causes a predetermined image to be displayed on the display module 107 in response to a display control signal received from the control module 101. The operation module 109 includes input means such as an operation key and a mouse. The operation processing circuit 110 outputs an output signal to the control module 101 in response to the operation of operation module 109 in response to an operation control signal from the control module 101. The display module 107 and the operation module 109 may be constituted of a liquid crystal panel in which a touch panel is superposed on a liquid crystal display.

In the present embodiment, the program stored in the storage module 102 provides a first fish counting module 101a, a second fish counting module 101b, a fish tracking module 101c, a fish species identification module 101d or a trained processing module 101d, a fish size calculating module 101e, a fish biomass calculating module 101f and an occlusion region calculating module 101g, wherein each of the modules is configured to perform different functions associated with the control module 101.

The first fish counting module 101a analyzes a plurality of images acquired by the underwater camera system 103 to detect and count each fish of the one or more fish in the image as a first count value. The first fish counting module 101a counts each fish of the one or more fish that have passed detection region D1 in the direction toward the second fish cage 20 (Positive X-Axis).

The second fish counting module 101b detects and counts each fish of the one or more fish in an occlusion region resulting from an occlusion by the one or more fish detected by the first fish counting module 101a. The second fish counting module 101b detects and counts the fish, based on the echo data acquired from the underwater ultrasonic system 105, as a second count value. The second fish counting module 101b, like the first fish counting module 101a, counts the fish that have passed detection region D1 in the direction toward the second fish cage 20 (Positive X-Axis).

The fish tracking module 101c tracks each fish of the one or more fish in the image and a previously acquired image in time series by the underwater camera system 103 and detects the swimming direction of each fish. For example, the fish tracking module 101c identifies, in the current image, a first fish from the one or more fish that is closest in size and position to a second fish from the one or more fish detected in the image one step prior. The fish tracking module 101c attaches a flag indicating that the first fish and the second fish are the same fish and detects the changing of the current position of the fish with respect to the position of the fish one step before as the swimming direction of the fish. The fish tracking module 101c sequentially repeats the processing to track the movement of each fish from the one or more fish and to detect the swimming direction of each fish of the one or more fish. If a fish closest in size and position to the fish detected in the image one step before (or a previous image) cannot be specified in the current image, the fish tracking module 101c determines that the fish detected in the previous image has passed the detection region D1 and ends the tracking of the fish.

The fish species identification module 101d identifies the species of each fish of the one or more fish contained in the image acquired by the underwater camera system 103. When an image including the fish detected by the first fish counting module 101a is inputted into the fish species identification module or the trained processing module 101d, the trained processing module 101d outputs a fish species of the fish. The trained processing module 101d is trained beforehand with images of the fish of a predetermined fish species. The training is based on Artificial Intelligence (AI) techniques known in the art.

The fish size calculating module 101e calculates the size of each of the fish detected by the first fish counting module 101a based on the image including the fish. The fish size calculating module 101e calculates the fork length and body height of the fish in the image and further calculates the body weight (estimated value) of the fish from the calculation result of fork length and body height. The fork length and body height can be calculated based on the region in the image covered by the fish and the distance to the fish calculated by the parallax of the cameras 51, 52 (Stereo camera system). The fish species may be included in the calculation of body weight (estimated value).

The fish biomass calculating module 101f calculates fish biomass (gross weight) based on the fish counts outputted by the first fish counting module 101a, the fish counts outputted by the second fish counting module 101b, and the fish size calculated by the fish size calculating module 101e. The fish biomass calculating module 101f calculates the fish biomass for each fish species. For example, the fish biomass calculating module 101f calculates the fish biomass of the target fish species as set by the operation module 109. The calculated biomass, together with the fish species and fish counts, are presented in the display module 107.

The occlusion region calculating module 101g calculates, based on the images acquired by the cameras 51, 52, the occlusion region caused by the one or more fish detected by the first fish counting module 101a as coordinates of a three-dimensional region.

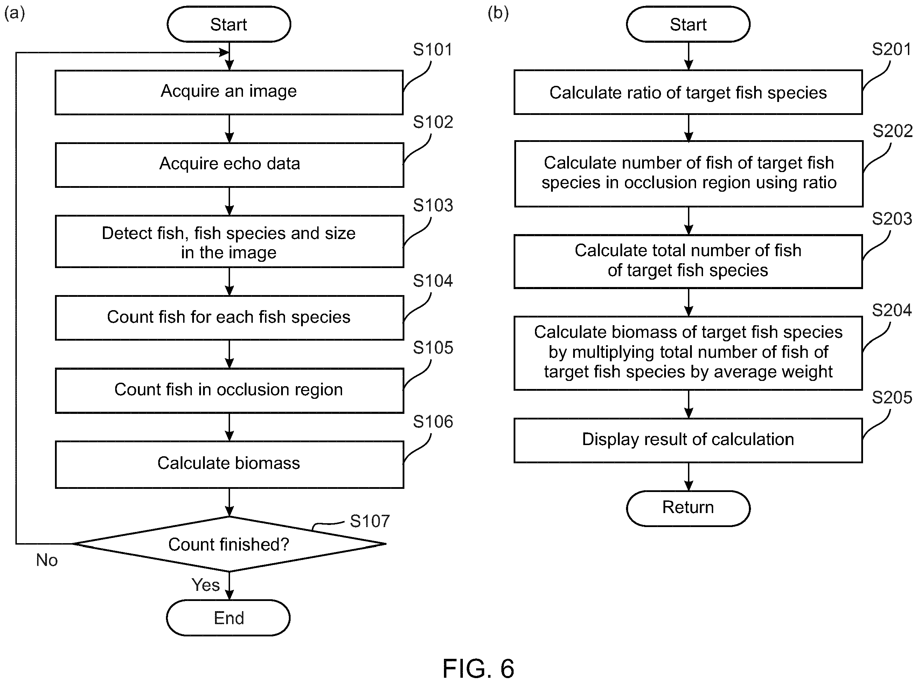

FIG. 6(a) is a flowchart of a method illustrating a process for detecting and counting fish passing through the detection region D1.

The processing of FIG. 6 (a) is executed by the control module 101 from the above functions assigned to the control module 101 by the above program stored in the storage module 102.

In the following description, for convenience, it is assumed that the control module 101 performs the processing of FIG. 6(a).

At step S101, the control module 101 acquires an image from the underwater camera system 103 (cameras 51, 52), and further, at step S102, acquires echo data from the underwater ultrasonic system 105 in a fixed cycle. Next, at step S103, the control module 101 analyzes the acquired image to detect the one or more fish in the image and further detects the species and size of the one or more fish from the detected image of the one or more fish. Further, at step S104, the control module 101 tracks the fish in the image and a previously acquired image in time series and counts fish in the first count value that have passed the detection region D1 in the direction toward the second fish cage 20 for each fish species. Further, the first count value corresponding to each fish species may be determined. Thus, there may be a plurality of first count value corresponding to a plurality of fish species.

Further, at step S105, the control module 101 detects and counts fish (occlusion region fish) in the second count value, for each species of fish, where the fish counted in the second count value have passed the detection region D1 in the direction toward the second fish cage 20 while being hidden behind a fish in a series of images acquired from the underwater camera system 103. The fish in the second count value are detected using echo data acquired from the underwater ultrasonic system 105. Then, at step S106, the control module 101 calculates the biomass (gross weight) of the fish species to be measured on the basis of the first count value obtained in the step S104, the second count value obtained in the step S105, and the size obtained in the step S103. At step S107, the control module 101 checks whether the counting is finished, and if yes, then displays the calculated biomass along with the fish species and total number in display module 107 and ends the method of FIG. 6(a), and if the counting is not finished, the steps S101-S106 are repeated iteratively.

Thereafter, the control module 101 determines whether or not the fish counting operation has been completed at step S107. Specifically, the control module 101 determines whether or not the operation module 109 has been operated to terminate the counting operation. If the fish counting operation has not been completed (S107: NO), the control module 101 returns the processing to step S101 and executes the processing in the next cycle. Thus, the calculation result of the biomass is updated every fixed period and displayed on the display module 107. After that, when the counting operation is completed (S107: YES), the control module 101 terminates the processing of the method of FIG. 6(a). The processing of different steps of the method shown in FIG. 6a, is performed by the functions of the various modules including: the first fish counting module 101a, the fish species identification module 101d and the fish size calculating module 101e in the control module 101 for step S103; the first fish counting module 101a and the fish tracking module 101c for step S104. The processing of step S105 is performed by the functions of the second fish counting module 101b and the occlusion region calculating module 101g in the control module 101; and the processing of step S106 is performed by the function of the fish biomass calculating module 101f in the control module 101.

FIG. 6(b) is a flowchart illustrating a method for biomass calculation in step S106 of FIG. 6(a).

Initially, at step S201, the control module 101 calculates the ratio of the counted value (a first count value of target fish species) of fish of the target fish species to the total number (sum of first count values of all fish species) of fish of all the fish species from the calculation result (a first count value) of each fish species calculated in step S104 of FIG. 6 (a). Next, at step S202, the control module 101 multiplies the second count value calculated in step S105 in FIG. 6 (a) by the ratio calculated in step S201 to calculate the number of fish of the target fish species included in the occlusion region and having passed the detection region D1 in the direction of the second fish cage 20.

That is, in step S105 of FIG. 6 (a), since the fish is detected based on the echo data, it is difficult to identify the fish species of the detected fish. For this reason, in step S105, the total number of fish that have passed the detection region D1 in the direction of the second fish cage 20 is simply counted without being distinguished by the fish species. On the other hand, in step S103 of FIG. 6 (a), since the fish is detected based on the image, the fish species of each fish can be identified with high accuracy. Therefore, in step S104, the number of fish passing the detection region D1 in the direction of the second fish cage 20 is counted for every fish species.

Therefore, at the step S202 of FIG. 6(b), the count value of the target fish species is estimated by analogizing that the ratio of the target fish species to the second count value (total number of all fish species) calculated in step S105 of FIG. 6(a) is equal to the ratio of the first count value of the target fish species to the sum of the first count values of all the fish species calculated in step S104. The count value (second count) of fish of all fish species calculated in step S105 in FIG. 6 (a) is multiplied by the ratio of the number of the target fish species to the total number of all fish species calculated in step S201 to calculate the number of fish of the target fish species that have passed the detection region D1 in the direction of the second fish cage 20 while being included in the occlusion region.

Thereafter, at step S203 the control module 101 adds the count value of the target fish species calculated in step S202 to the count value of the target fish species calculated in step S104 in FIG. 6 (a) to calculate the total number of fish of the target fish species which have passed the detection region D1 in the direction of the second fish cage 20. Then, at step S204, the control module 101 calculates the average weight of the target fish species from the size of fish of the target fish species detected in step S103 of FIG. 6 (a) and multiplies the calculated average weight by the total number of fish of the target fish species calculated in step S203 to calculate the fish biomass (gross weight) of the target fish species. Further, at step S205, the control module 101 displays the calculated fish biomass together with the fish species and the total number on the display module 107 (S205) and ends the processing of FIG. 6 (a).

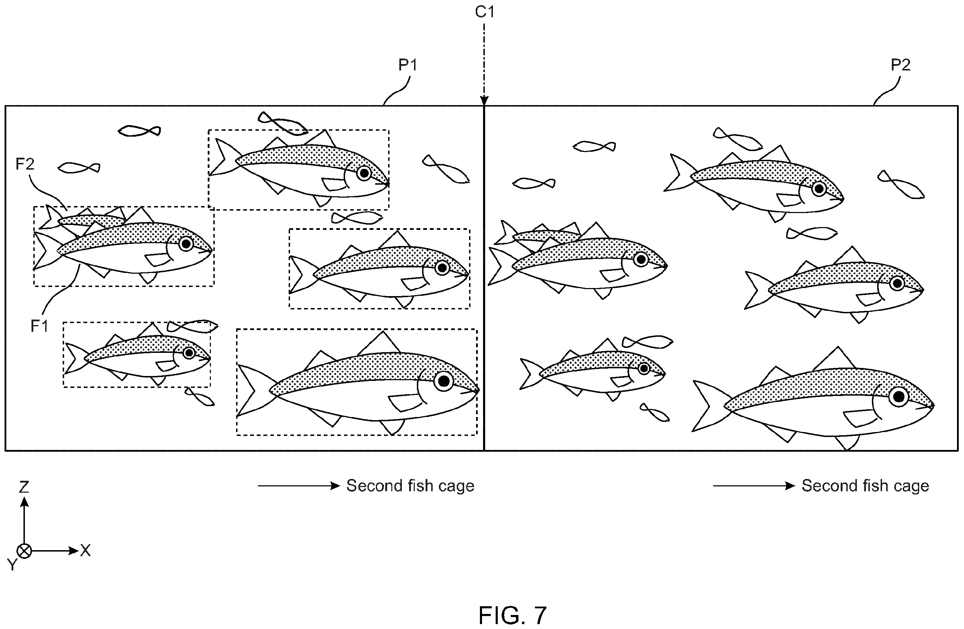

FIG. 7 is a diagram schematically illustrating an image acquired by the underwater camera system 103 according to an embodiment.

As described above, since the underwater camera system 103 includes the two cameras 51 and 52 arranged side by side in the X-axis direction, as shown in FIG. 7, two images P1 and P2 are acquired by the respective cameras 51 and 52. The image PI is an image acquired by the camera 51, and the image P2 is an image acquired by the camera 52. Since the cameras 51 and 52 pick up the same detection region D1, images P1 and P2 contain images of the same plurality of fish. However, in the images of the same plurality of fish included in the images PI and P2, positional deviation occurs in accordance with the parallax of the cameras 51 and 52. Based on the positional deviation and the parallax, a distance from the underwater camera system 103 to each fish of the plurality of fish can be calculated.

In the image PI, the detection result of the target fish species is shown by a broken line frame. Here, the target fish species is yellowtail. In step S103 of FIG. 6 (a), the control module 101 identifies the detected fish species by the function of the fish species identification module 101d illustrated in FIG. 5. The control module 101 calculates the size (fork length, height, weight) of the detected fish by the function of the fish size calculating module 101e illustrated in FIG. 5. Similarly, the control module 101 identifies the fish species and calculates the size of the other fish species in the image P1.

In step S104 of FIG. 6 (a), the control module 101 tracks the movement of a fish by the function of the fish tracking module 101c illustrated in FIG. 5. By the function of the first fish counting module 101a shown in FIG. 5, the control module 101 counts up the counted value (first count value) of fish based on the image in response to the fish passing through a counting reference position C1 in the direction toward the second fish cage 20. As shown in FIG. 7, the counting reference position C1 is set, for example, at a boundary of the image PI on the positive side of the X-axis. However, the method of setting the counting reference position C1 is not limited thereto, and for example, the counting reference position C1 may be set at a position shifted from the boundary on the positive X-axis side of the image PI toward the negative X-axis side.

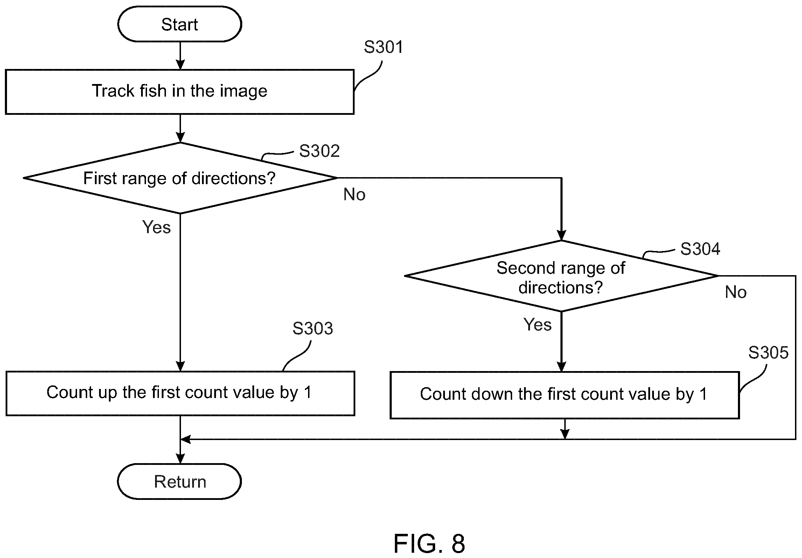

FIG. 8 is a flowchart illustrating a method for an image-based fish counting in step S104 of FIG. 6(a) according to an embodiment. As described above, this method is performed by the control module 101 using the functions of the first fish counting module 101a and the fish tracking module 101c.

At step S301, the control module 101 tracks each fish of the one or more fish included in the image acquired this time (or currently or a current image) from the underwater camera system 103 and at least one image from the series of images acquired previously from the underwater camera system 103 and detects the swimming direction of each fish of the one or more fish. The control module 101 performs this processing for each fish included in the image.

Next, at step S302, the control module 101 determines whether or not the tracked fish has passed the counting reference position C1 while the swimming direction of the tracked fish is included in a first range of directions toward the second fish cage 20. The first range of directions is a range of directions including vector components in a direction toward the second fish cage 20 (X-axis positive direction). Whether or not the tracked fish has passed through the counting reference position C1 is determined by, for example, whether or not a predetermined range on the front side of the tracked fish has exceeded the counting reference position C1 in a first direction in the image acquired currently.

If the determination in step S302 is YES, the method proceeds to step S303. At step S303, the control module 101 counts up the first count value by 1 for the species of fish to be determined and terminates the processing of FIG. 8. On the other hand, if the determination in step S302 is NO, the method proceeds to step S304. At step S304, the control module 101 determines whether or not the tracked fish at step S301 has passed the counting reference position C1 while the swimming direction of the tracked fish is included in a second range of directions toward the first fish cage 10. The second range of directions is a range of directions including vector components in a direction toward the first fish cage 10 (X-axis negative direction). Whether or not the tracked fish has passed the counting reference position C1 is determined by whether or not a predetermined range on the front side of the tracked fish has exceeded the counting reference position C1 in a second direction, as in step S302.

If the determination in step S304 is YES, the method proceeds to step S305. At step S305, the control module 101 counts down the first count value by 1 for the species of fish to be determined. On the other hand, if the determination in step S304 is NO, the control module 101 terminates the processing of FIG. 8 without changing the first count value for the species of fish to be determined. Therefore, the first fish counting module 101a is configured to increase or decrease the first count value of the detected one or more fish based on the fish species.

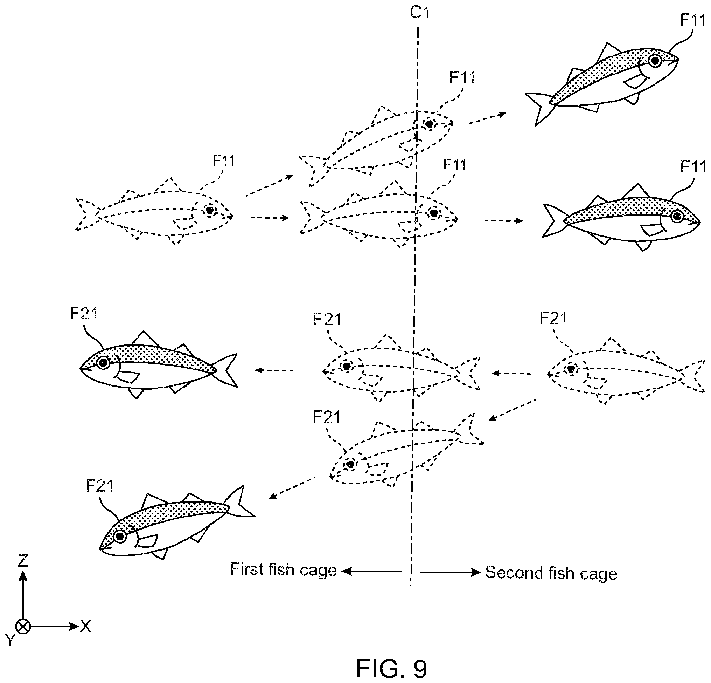

FIG. 9 is a diagram schematically illustrating an example of the fish counting process shown in FIG. 8 according to an embodiment.

As shown in the upper part of FIG. 9, when the fish F11 exceeds the counting reference position C1 in the first range of directions heading to the second fish cage 20, the counted value of the fish species of the fish F11 is counted up by 1 count. In this case, not only when the fish F11 swims substantially parallel to the positive X-axis direction and exceeds the counting reference position C1 as shown in the lower side of the upper part of FIG. 9, but also when the fish F11 swims obliquely upward to the positive X-axis direction and exceeds the counting reference position C1 as shown in the upper side of the upper part of FIG. 9, the count value of the fish species of the fish F11 is incremented by 1.

On the other hand, as shown in the lower part of FIG. 9, when the fish F21 exceeds the counting reference position C1 in the second range of directions heading to the first fish cage 10, the counted value of the fish species of the fish F21 is counted down by 1 count. In this case, not only when the fish F21 swims substantially parallel to the X-axis negative direction and exceeds the counting reference position C1 as shown in the upper side of the lower part of FIG. 9, but also when the fish F21 swims obliquely downward to the X-axis negative direction and exceeds the counting reference position C1 as shown in the lower side of the lower part of FIG. 9, the count value of the fish species of the fish F21 is counted down by 1.

In this way, when the fish F21 exceeds the counting reference position C1 in the second range of directions, the count value of the fish species of the fish F21 is counted down by 1, so that when the fish that has passed the counting reference position C1 in the direction of the second fish cage 20 reverses and passes the counting reference position C1 in the direction of the first fish cage 10, the count of the fish can be canceled. Thus, the number of fish moved from the first fish cage 10 to the second fish cage 20 can be accurately measured.

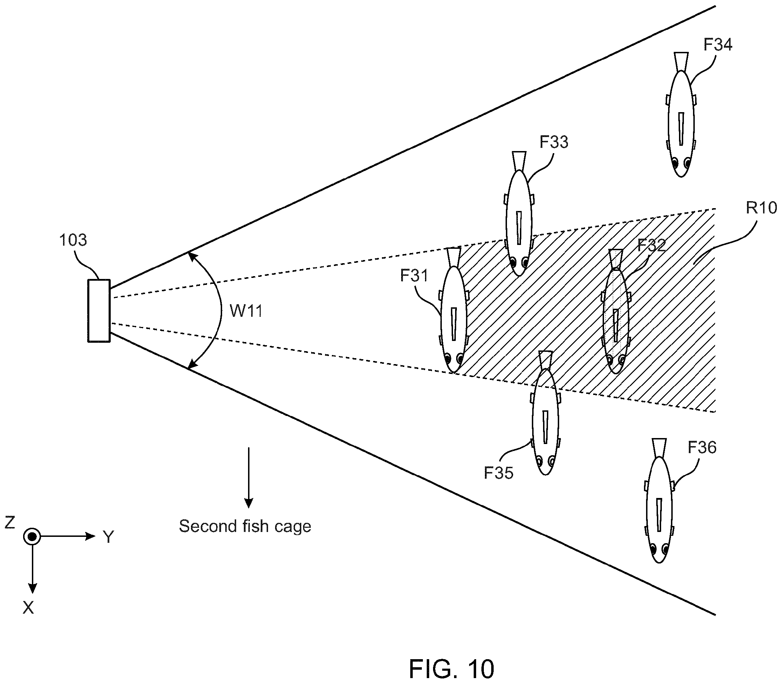

FIG. 10 is a diagram schematically illustrating a state in which occlusion is caused by a fish according to an embodiment.

The underwater camera system 103 images an imaging range W11 in a horizontal direction. In this case, occlusion may occur due to fish F31 to F36 included in the imaging range W11. In FIG. 10, only the occlusion region R10 caused by the fish F31 is shown in hatching.

In this example, occlusion region R10 includes the whole fish F32. Therefore, the fish F32 cannot be detected in the image from the underwater camera system 103. For fish F35, the tail portion is contained in the occlusion region R10, while the other portion emerges from the occlusion region R10. Therefore, the fish F35 is detected by the image from the underwater camera system 103. The fish F33 is not included in the occlusion region R10 because it is positioned higher than the fish F31 in the Z-axis direction. Therefore, the fish F33 is detected by the image from the underwater camera system 103. Fish F34, F36 are detected by the image from the underwater camera system 103 because they are not included in any occlusion region caused by other fish.

Thus, the fish included in the occlusion region cannot be detected from the image from the underwater camera system 103, and only the fish not included in the occlusion region can be detected. In the example of FIG. 7, the fish F2 behind the fish F1 cannot be detected by either of the images PI and P2. In this case, the fish which has passed through the counting reference position C1 while being contained in the occlusion region is not counted even though it has moved to the second fish cage 20.

In this embodiment, this problem is solved by step S105 in FIG. 6 (a). That is, in step S105, the control module 101 detects and counts the fish contained in the occlusion region with echo data from the underwater ultrasonic system 105. The detection process is described below.

### <Method for detecting one or more fish of occlusion region>

The method of detecting one or more fish of occlusion region may vary depending on the configuration of the transducer element disposed in the transducer 53.

FIGS. 11 (a) to 11 (c) are diagrams illustrating examples of the configuration of the transducer element disposed in the transducer 53. In the following, the configurations of the transducer element and the corresponding methods of detecting the fish of the occlusion region are described.

### <First Detection Method>

FIG. 11(a) illustrates a first configuration of the transducer element disposed in the transducer 53. When the transducer 53 with the first configuration of the transducer element is used, a first detection method for detecting a fish of the occlusion region is used. In the first configuration example illustrated in FIG. 11(a), the transducer 53 has a plurality of transducer elements 531 arranged in a plurality of channels. That is, the transducer 53 has a plurality of transducer elements 531 arranged in a matrix of 4 rows and 4 columns. The transducer elements 531 are used for transmission and reception. That is, the transducer elements 531 function as transmission transducer elements during transmission and as reception transducer elements during the reception. The transducer elements 531 are ultrasonic transducers. The number of transducer elements 531 disposed in the transducer 53 is not limited to the number shown in FIG. 11 (a).

Accordingly, in the first detection method, during the transmission, the transmission/reception processing circuit 106 in FIG. 5 drives predetermined transducer elements among the transducer elements 531 to transmit an ultrasonic wave. Thus, the ultrasonic wave is transmitted to the region including the detection region D1. In addition, the transmission/reception processing circuit 106 processes reception signals outputted from all the transducer elements 531 at the time of reception. The transmission/reception processing circuit 106 performs beamforming on the reception signals from each reception transducer element to form a plurality of reception beams distributed in a horizontal angle direction and an elevation angle direction and generates echo data in the direction of each reception beam. Thus, the transmission/reception processing circuit 106 generates echo data distributed in a three-dimensional manner in the detection region D1 and outputs the generated echo data to the control module 101.

Therefore, when the transducer 53 as shown in FIG. 11 (a) is used, the target (fish) included in the detection region D1 can be detected in a three-dimensional state with the resolution of each reception beam in the horizontal angle direction and the elevation angle direction and the predetermined distance resolution. Therefore, in this configuration example, the fish included in the occlusion region as shown in FIG. 10 can be detected from the echo data included in the occlusion region. Since the distance resolution is high in target detection using echo data, even if a plurality of fish overlap in the Y direction in the occlusion region, these fish can be appropriately detected based on the echo data.

In this case, at the timing when the fish detected (tracked) on the image passes through the counting reference position C1 in the X-axis positive direction (first range of directions), if a fish is detected in the occlusion region of the fish based on the echo data, the second count value is increased by the number of detected fish. Further, at the timing when the fish detected (tracked) on the image passes through the counting reference position C1 in the X-axis negative direction (second range of directions), if a fish is detected in the occlusion region of the fish based on the echo data, the second count value is counted down by the number of detected fish.

Alternatively, if the resolution of target detection based on the echo data is high, the fish contained in the occlusion region may be tracked based on the echo data. In this case, it suffices to count up the second count value when the fish has passed through the counting reference position C1 in the positive X-axis direction (first range of directions) and to count down the second count value when the fish has passed through the counting reference position C1 in the negative X-axis direction (second range of directions) by tracking based on echo data.

### <Second Detection Method>

FIG. 11(b) illustrates a second configuration of the transducer element disposed in the transducer 53. When the transducer 53 with the second configuration of the transducer element is used, a second detection method for detecting a fish of the occlusion region is used. In the second configuration example illustrated in FIG. 11 (b), the transducer 53 has one transmission transducer element 532 and a plurality of reception transducer elements 533 arranged in a plurality of channels. That is, the transducer 53 has a transmission transducer element 532 that is arranged in the X-axis direction and a plurality of reception transducer elements 533 that are arranged in the Z-axis direction. The transmission transducer element 532 and the reception transducer elements 533 are ultrasonic transducers. The number of the transmission transducer elements 532 and the reception transducer elements 533 disposed in the transducer 53 is not limited to the number shown in FIG. 11 (b).

Accordingly, in the second detection method, during the transmission, the transmission/reception processing circuit 106 in FIG. 5 drives the transmission transducer element 532 to transmit ultrasonic waves. Thus, the ultrasonic waves are transmitted to substantially the same region as the detection region D1. In addition, the transmission/reception processing circuit 106 processes the reception signals outputted from all the reception transducer elements 533 at the time of reception. The transmission/reception processing circuit 106 performs beamforming on the reception signals from each reception transducer element to form a plurality of reception beams distributed in an elevation angle direction and generates echo data in the direction of each reception beam. Thus, the transmission/reception processing circuit 106 generates echo data distributed in the elevation angle direction in the detection region D1, and outputs the generated echo data to the control module 101.

When the transducer 53 shown in FIG. 11 (b) is used, the reception beams have resolution only in the direction of elevation angle and do not have a resolution in the horizontal angle direction. Therefore, with the second configuration, the target (fish) included in the detection region D1 can be detected with the resolution of each reception beam in the elevation angle direction and the predetermined distance resolution. Therefore, with the second configuration example, unlike the configuration example of FIG. 11 (a), the fish contained in the occlusion region cannot be directly detected from the echo data. In the second configuration, the fish contained in the occlusion region can be detected based on the detection result of the fish based on the echo data of each received beam and the detection result of the fish based on the image, as follows.

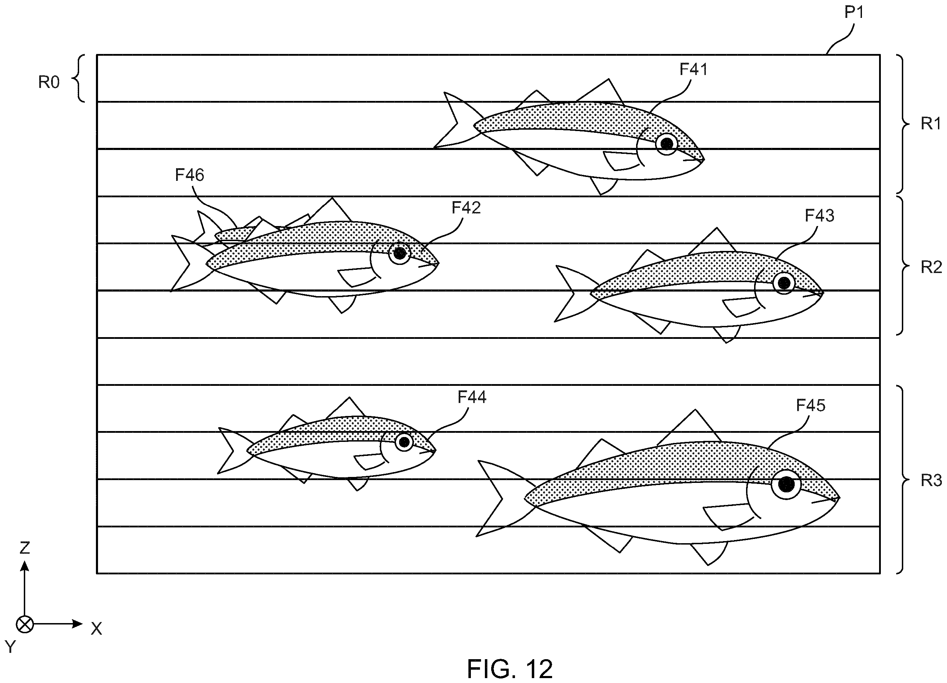

FIG. 12 is a diagram schematically illustrating a fish detection method (i.e., the second detection method) when the transducer 53 of FIG. 11 (b) (i.e., the second configuration) is used.

In FIG. 12, R0 is a region on image P1 detectable by one reception beam. In this configuration example, fish F41 to F45 are detected based on the image P1. Since fish F46 is included in the occlusion region of the fish F42, it is not detected from the image P1. In this case, one fish is detected from the image P1 for the region R1 comprising three regions. For region R2, two fish are detected from the image P1, and for region R3, two fish are detected from the image P1.

Therefore, when one fish is detected from the echo data corresponding to the region R1, it can be determined that no fish exists in the occlusion region of the fish F41. On the other hand, when two fish are detected from the echo data corresponding to the region R1, it can be determined that one fish exists in the occlusion region of the fish F41. Similarly, when two fish are detected from the echo data corresponding to the region R2, it can be determined that no fish is present in any of the occlusion regions of the fish F42, F43, and when three fish are detected from the echo data corresponding to the region R2, it can be determined that one fish is present in the occlusion regions of the fish F42, F43. When two fish are detected from echo data corresponding to region R3, it can be determined that no fish exists in any of the occlusion regions of the fish F44, F45, and when four fish are detected from echo data corresponding to region R3, it can be determined that two fish exist in the occlusion regions of the fish F44, F45.

In the example of FIG. 12, the fish F46 is hidden behind the fish F42. Thus, at least three fish are detected from the echo data corresponding to the region R2. Thus, the difference between the two fish detected from the image of the region R2 and at least three fish detected from the echo data corresponding to the region R2 can be detected as the number of fish contained in any of the occlusion regions of the fish F42, F43.

In this case, when the number of fish detected by the echo data corresponding to the region R2 decreases at a timing approximately equal to the timing when the fish F42 that passes the boundary of the image P1 on the positive side of the X-axis in the positive direction of the X-axis is not detected anymore in the image P1, it can be estimated that a number of fish corresponding to the decreased amount passed through the counting reference position C1 in the positive direction of the X-axis while being included in the occlusion region of the fish F42. Therefore, the second count value is counted up by the number of fish corresponding to the decreased amount.

On the other hand, when the number of fish detected by the echo data corresponding to the region R2 increases at a timing approximately equal to the timing when the fish F42 that passes the boundary of the image P1 on the positive side of the X axis in the negative direction of the X axis is detected, it can be estimated that a number of fish corresponding to the increased amount have passed through the counting reference position C1 in the negative direction of the X axis while being included in the occlusion region of the fish F42. Therefore, the second count value is counted down by the number of fish corresponding to the increased amount.

### <Third Detection Method>

FIG. 11(c) illustrates a third configuration of the transducer element disposed in the transducer 53. When the transducer 53 with the third configuration of the transducer element is used, a third detection method for detecting a fish of the occlusion region is used. In the third configuration example illustrated in FIG. 11 (c), the transducer 53 has one transducer element 534 disposed in a single channel. The transducer element 534 is used for transmission and reception. That is, the transducer element 534 functions as a transmission transducer element during transmission and as a reception transducer element during reception. Similar to the configuration of FIG. 11 (a), the transducer element 534 is an ultrasonic transducer. The number of transducer elements 534 constituting a single channel is not limited to the number shown in FIG. 11 (c).

Accordingly, in the third detection method, the transmission/reception processing circuit 106 in FIG. 5 drives the transducer element 534 to transmit an ultrasonic wave during transmission. Thus, the ultrasonic wave is transmitted to substantially the same region as the detection region D1. The transmission/reception processing circuit 106 processes a reception signal outputted from the transducer element 534 at the time of reception. The transmission/reception processing circuit 106 generates echo data based on the reflected wave from the entire detection region D1 and outputs the generated echo data to the control module 101.

When using the transducer 53 of FIG. 11 (c), the difference between the number of fish detected by the image PI and the number of fish detected by the echo data can be detected as the total number of fish contained in the occlusion region. That is, since the distance resolution of target detection by the echo data is high when the echo data is used, not only the one or more fish included in the occlusion region but also the one or more fish outside the occlusion region can be detected with high accuracy. On the other hand, in the detection method using the image, the fish contained in the occlusion region cannot be detected. Therefore, the total number of fish contained in each occlusion region can be calculated by subtracting the number of fish detected by the image from the number of fish detected by the echo data.

In this case, for example, when the number of fish detected by the echo data decreases at a timing substantially equal to the timing when a predetermined fish that passes the boundary of the image P1 on the positive side of the X-axis in the positive direction of the X-axis is not detected anymore in the image P1, it can be estimated that a number of fish corresponding to the decreased amount have passed through the counting reference position C1 in the positive direction of the X-axis while being included in the occlusion region of the fish. Therefore, the second count value is counted up by the number of fish corresponding to the decreased amount.

On the other hand, when the number of fish detected by the echo data increases at a timing substantially equal to the timing when a predetermined fish that passes through the boundary of the image P1 on the positive side of the X axis in the negative direction of the X axis is detected, it can be estimated that a number of fish corresponding to the increased amount have passed through the counting reference position C1 in the negative direction of the X axis while being included in the occlusion region of the fish. Therefore, the second count value is counted down by the number of fish corresponding to the increased amount.

### <First Counting Method>

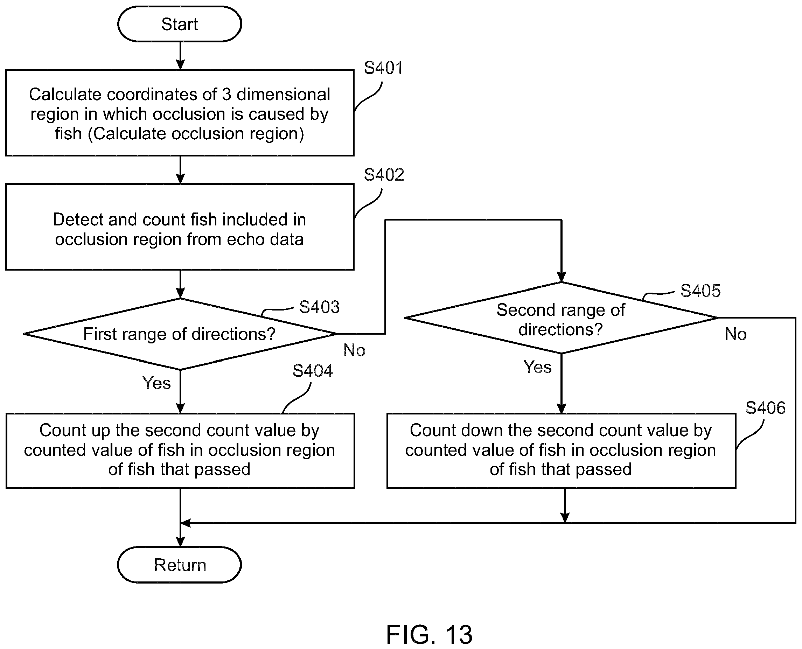

FIG. 13 is a flowchart illustrating a first method for fish counting (i.e., the first counting method) (counting of the second count value) in step S105 of FIG. 6(a) when the first detection method is applied.

According to the first counting method, at step S401, the control module 101 calculates, based on the image acquired by the underwater camera system 103, coordinates of a three-dimensional region (occlusion region) in which occlusion is caused by the one or more fish in the image. Next, at step S402, the control module 101 detects and counts each fish included in the three-dimensional region (occlusion region) from the echo data acquired by the underwater ultrasonic system 105. Then, at step S403, the control module 101 determines whether any fish in the occlusion region of the one or more fish has passed through the counting reference position C1 in the first range of directions or the second range of directions by tracking the fish (in steps S403, S405).

When the fish has passed through the counting reference position C1 in the first range of directions (S403: YES), the first counting method proceeds to step S404. At step S404, the control module 101 counts up the second count value by the counted value of fish included in the occlusion region of the fish and then terminates the first counting method of FIG. 13. On the other hand, when the fish has passed through the counting reference position C1 in the second range of directions (S403: NO, S405: YES), the first counting method proceeds to step S406. At step S406, the control module 101 counts down the second count value by the counted value of fish included in the occlusion region of the one or more fish and then terminates the first counting method. If the determination at step S405 is NO, the control module 101 terminates the first counting method without changing the second count value.

### <Second Counting Method>

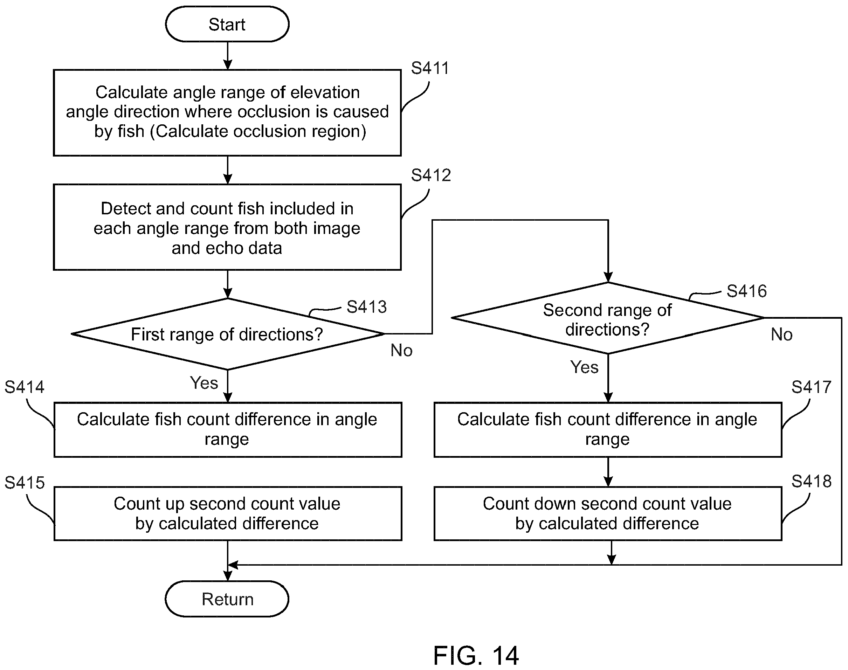

FIG. 14 is a flowchart illustrating a second method for fish counting (i.e., the second counting method) (counting of the second count value) in step S105 of FIG. 6(a) when the second detection method is applied.

According to the second counting method, at step S411, the control module 101 calculates, based on the image acquired by the underwater camera system 103, an angle range of the elevation angle direction where occlusion is caused by one or more fish in the image. Next, at step S412, the control module 101 detects and counts the fish included in the angle range from the image acquired by the underwater camera system 103, and further detects and counts the fish included in the angle range from the echo data acquired by the underwater ultrasonic system 105. Then, at step S413, the control module 101 determines whether the one or more fish have passed through the counting reference position C1 in the first range of directions or the second range of directions by tracking the one or more fish (in steps S413, S416).

When the fish has passed through counting reference position C1 in the first range of directions (S413: YES), the second counting method proceeds to step S414. At step S414, the control module 101 calculates, for the angle range including the fish, the difference between the counted value of the fish based on the counting in the images and the counted value of the fish based on the echo data in step S412. Further, at step S415, the control module 101 counts up the second count value by the calculated difference and then the second counting method is terminated.

On the other hand, when the fish has passed through the counting reference position C1 in the second range of directions (S413: NO, S416: YES), the second counting method proceeds to step S417. At step S417, the control module 101 calculates, for the angle range including the fish, the difference between the counted value of the fish based on the counting in the images and the counted value of the fish based on the echo data in step S412. Then, at step S418, the control module 101 counts down the second count value by the calculated difference and then terminates the second counting method. If the determination at step S416 is NO, the control module 101 terminates the second counting method without changing the second count value.

### <Third Counting Method>

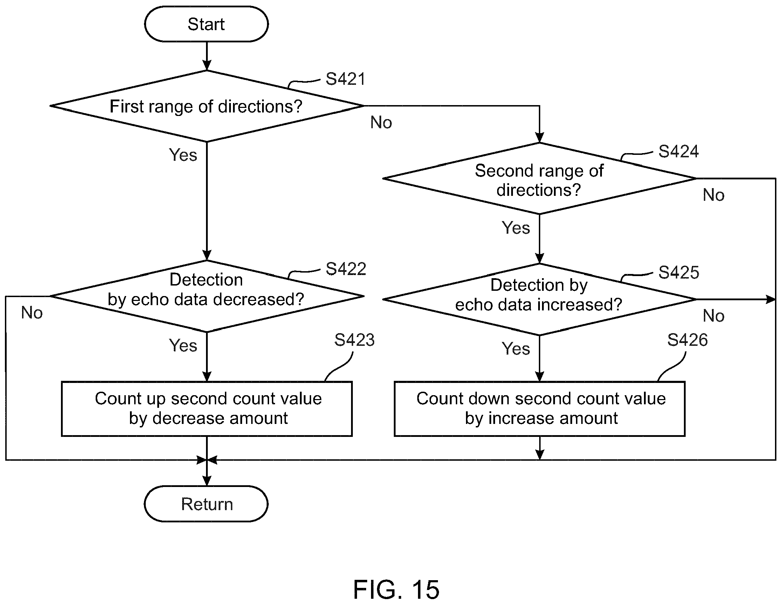

FIG. 15 is a flowchart illustrating a third method for fish counting (i.e., the third counting method) (counting of the second count value) in step S105 of FIG. 6(a) when the third detection method is applied.

According to the third counting method, at step S421, the control module 101 determines, by tracking the fish based on the images acquired by the underwater camera system 103, whether the fish in the images has moved in the first range of directions and disappeared from the images (whether no longer detected on the images). When the fish moves in the first range of directions and disappears from the image (S421: YES), the third counting method proceeds to step S422. At step S422, the control module 101 determines whether or not the number of detected fish based on the echo data decreases at almost the same timing as the fish disappears. If the determination in S422 is YES, the third counting method proceeds to step S423. At step S423, the control module 101 counts up the second count value by the decreased amount in the detected number and then terminates the third counting method. On the other hand, if the determination is S422 is NO, the third counting method is terminated without changing the second count value.

If the determination in step S421 is NO, the third counting method proceeds to step S424. At step S424, the control module 101 determines, by tracking the fish based on the images acquired by the underwater camera system 103, whether the fish in the image has moved in the second range of directions and appeared in the image. If the fish has moved in the second range of directions and appeared in the image (S424: YES), the third counting method proceeds to step S425. At step S425, the control module 101 determines whether or not the number of detected fish based on the echo data has increased at about the same timing as the fish has appeared. If the determination in S425 is YES, the third counting method proceeds to step S426. At step S426, the control module 101 counts down the second count value by the increased amount of the detected number and then terminates the third counting method. On the other hand, if the determination in S424 is NO or if the determination in S425 is NO, the control module 101 terminates the third counting method without changing the second count value.

### <Effect of the embodiment>

According to the above embodiment, the following effects can be obtained.

The one or more fish included in the images acquired by the underwater camera system 103 are detected and counted by the first fish counting module 101a. Fish that cannot be detected in this image, that is, fish hidden behind the one or more fish in this image (occlusion region fish) are detected and counted by the underwater ultrasonic system 105 using echo data acquired by the second fish counting module 101b. Therefore, the fish spreading in the Y direction can be detected and counted with high accuracy.

Here, since the underwater camera system can obtain a high-precision image even if it is relatively inexpensive, the first fish counting module 101a can detect and count fish in the image with high precision. Also, since the second fish counting module 101b only needs to be able to additionally detect whether or not there is a fish present in the occlusion region, the underwater ultrasonic system 105 need not be configured to provide high-resolution echo data in three dimensions, for example, by providing a transducer 53 having a simple configuration as shown in FIGS. 11(a) - 11(c). Therefore, according to the fish detection device 50 of the present embodiment, it is possible to detect and count fish swimming in water with high accuracy while suppressing an increase in cost.

As shown in FIG. 5, the fish detection device 50 further includes the fish tracking module 101c for tracking a fish by using the image and a previously acquired image in time series by the underwater camera system 103, and for detecting a direction in which the fish swims. Then, as shown in FIG. 8, the first fish counting module 101a increases or decreases the first count value based on the swimming direction of the one or more fish.

Specifically, the first fish counting module 101a increases the first count value (S303) when the fish is tracked as swimming in the first range of directions (S302: YES) and decreases the first count value (S305) when the fish is tracked as swimming in the second range of directions, different from the first range of direction (S304: YES).

Thus, for example, as shown in FIG. 9, if a fish that swam in the first direction reversed and then swam in the second direction, the fish count increase that occurred when the fish was tracked as swimming in the first range of directions is canceled when the fish was then tracked as swimming in the second range of directions, and as a result, this fish does not get counted. Therefore, the fish remaining in the second fish cage 20 while moving in the first direction can be accurately counted.

As shown in FIG. 5, the fish detection device 50 further includes a trained processing module (i.e., the fish species identification module 101d) configured to identify corresponding fish species for each of the one or more fish detected by the first fish counting module 101a based on the image comprising the detected one or more fish. The first fish counting module 101a is configured to increase or decrease the first count value of the detected one or more fish based on the fish species. The trained processing module is further configured to output the fish species of the one or more fish detected by the first fish counting module 101a when inputted with the image containing the detected one or more fish, and the first fish counting module 101a counts the detected one or more fish based on the identified fish species.

According to this configuration, the first fish counting module 101a can count fish for each fish species. Thus, as shown in FIG. 6 (b), from the count value for each fish species in the first fish counting module 101a, the ratio of each fish species to the count value for all fish species by the first fish counting module 101a can be obtained (S201), and by multiplying this ratio by the count value in the second fish counting module 101b, the count value for each fish species can be calculated based on the count result in the second fish counting module 101b (S202). The total count result for each fish species can be calculated by adding the count value for each fish species based on the count result of the first fish counting module 101a to the count value for each fish species based on the count result of the second fish counting module 101b (S203).

As shown in FIG. 5, the fish detection device 50 includes the fish size calculating module 101e that calculates the fish size of the fish detected by the first fish counting module 101a based on the image containing the detected one or more fish, and the fish biomass calculating module 101f that calculates the fish biomass based on the first count value outputted by the first fish counting module 101a, the second count value outputted by the second fish counting module 101b, and the fish size.

According to this configuration, as shown in FIG. 6(b), the biomass (gross weight) of the detected and counted fish can be obtained. According to the processing of FIG. 6(b), the biomass of the target fish species can be calculated and displayed at any time on the display module 107 of the control processing unit 50a.

As shown in FIG. 5, the fish detection device 50 includes the occlusion region calculating module 101g that calculates coordinates of the three-dimensional region as the occlusion region. In this case, the second fish counting module 101b detects fish contained within the three-dimensional region. Thus, as shown in FIG. 13, it can be smoothly detected, based on the echo data, that the fish contained in the occlusion region has passed through the counting reference position C1, and the fish having passed through the counting reference position C1 can be smoothly counted.

Note that the coordinates of the occlusion region (the three-dimensional region) can be calculated in the case where the transducer 53 has, for example, the configuration shown in FIG. 11 (a), as described above. When the transducer 53 has the configuration shown in FIGS. 11 (b) and (c), for example, the coordinates of the occlusion region (the three-dimensional region) cannot be calculated. Thus, the occlusion region calculating module 101g shown in FIG. 5 can be applied when the transducer 53 has a layout of reception transducer elements capable of generating reception beams distributed in the horizontal angle and elevation angle directions. In this case, the layout of the reception transducer elements in the transducer 53 is not limited to the layout shown in FIG. 11 (a) and may be another layout capable of forming reception beams distributed in the horizontal angle and elevation angle directions. If the transducer 53 does not have a layout of reception transducer elements capable of forming reception beams distributed in the horizontal angle and elevation angle directions, the occlusion region calculating module 101g may be omitted.

As shown in FIG. 4, the underwater camera system 103 includes the stereo camera (cameras 51, 52). Thus, the distance to the one or more fish in the image can be calculated based on the parallax of the two cameras 51 and 52. Therefore, the occlusion region of the one or more fish can be smoothly set.

As shown in FIG. 11 (c), the underwater ultrasonic system 105 includes a transducer 53 having one or more transducer elements 534 (reception transducer elements) arranged in a single channel. In this case, the control module 101 (the second fish counting module 101b) can count fish passing through the counting reference position C1, hidden in the occlusion region, for example, by the process of FIG. 15.

Alternatively, as shown in FIGS. 11(a) and 11(b), the underwater ultrasonic system 105 may include a transducer 53 having a plurality of transducer elements 531 (reception transducer elements) or reception transducer elements 533 arranged in a plurality of channels, and the second fish counting module 101b may be configured to detect fish two-dimensionally or three-dimensionally. In this case, the control module 101 (the second fish counting module 101b) can count fish passing through the counting reference position C1, hidden in the occlusion region, for example, by the process of FIG. 13 or FIG. 14.

As shown in FIG. 4, the lenses 51a and 52a of the underwater camera system 103 and the transducer 53 of the underwater ultrasonic system 105 face substantially in the same direction. In this case, the same direction is, for example, the horizontal direction. Thus, an imaging region by the lenses 51a and 52a and an ultrasonic directivity region by the transducer 53 can be easily matched. Therefore, the fish which cannot be detected by the image from the underwater camera system 103 can be appropriately detected by the echo data from the underwater ultrasonic system 105.

As shown in FIGS. 1 to 3, the fish cage system 1 includes the fish detection device 50 of the above configuration and the path 30 connecting the first fish cage 10 and the second fish cage 20. The one or more fish migrate from the first fish cage 10 to the second fish cage 20 in the path 30 and the fish detection device 50 counts the one or more fish migrating in the path 30. According to the fish cage system 1 of this configuration, since the fish detection device 50 of the above configuration is provided, the one or more fish moving from the first fish cage 10 to the second fish cage 20 can be detected and counted with high accuracy.

Since the biomass of the target fish species is displayed as needed on the display module 107 of the control processing unit 50a, the biomass of the fish transferred from the inboard fish cage 41 to the first fish cage 10 and the second fish cage 20 can be appropriately grasped by referring to the biomass displayed on the display module 107. As a result, the user can transfer the fish biomass appropriate for the capacity of the fish cage system 1 from the ship fish cage 41 to the fish cage system 1, and after the transfer of the fish, the user can properly report the number of newly transferred fish and the biomass (gross weight) to the public agency.

By keeping the images obtained by the underwater camera system 103 on the storage module 102 along with the date for a certain period of time, the biomass of the fish transferred to the fish cage system 1 on that day may be appropriately presented in response to a request from the public agency or the like.

### <Modifications>

The present invention is not limited to the above embodiment. The embodiment of the present invention can be modified in various ways other than the above configuration.

For example, in the above embodiment, the underwater camera system 103 includes a stereo camera, but the underwater camera system 103 may include only one camera. In this case, the distance to the one or more fish in the image acquired by the camera may be acquired by echo data from the underwater ultrasonic system 105. For example, if the underwater ultrasonic system 105 includes the transducer 53 of the configuration of FIG. 11 (a), the distance to the fish closest to the camera among the fish detected by the echo data of the reception beam corresponding to the position of the fish on the image may be acquired as the distance to the fish on the image.

The method for tracking the fish and the method for detecting the direction in which the fish swim by the fish tracking module 101c are not limited to the methods shown in the above embodiment, but other methods may be used. For example, an image from the underwater camera system 103 may be analyzed to detect a direction of the fish (for example, a vector from the tail to the nose), and this direction may be acquired as the direction in which the fish swims.

In addition, the contents of the processes in the functional units applied to the control module 101 by the programs stored in the storage module 102 are not limited to the processes shown in FIGS. 6 (a) to 15 and may be changed as appropriate. For example, the fish biomass calculation process of the target fish species may be performed by a process other than the process of FIG. 6(b). In this case, for example, for the fish of the target fish species detected based on the image, a first biomass based on the image may be calculated by integrating the weight of each fish calculated by the fish size calculating module 101e, for the fish of the target fish species detected based on the echo data, a second biomass based on the echo data may be calculated by multiplying the average weight of the target fish species by the counted value based on the echo data (second count), and the first biomass and the second biomass may be added to calculate the biomass of the entire target fish species.

In the above embodiment, the first fish counting module 101a, the second fish counting module 101b, and the like are realized as the functions of the control module 101 provided by the program stored in the storage module 102, but these functions may not necessarily be realized as the functions provided by the program stored in the storage module 102. For example, one or more of these functions may comprise an FPGA (field-programmable gate array) or hardware integrated with a logic circuit.

The fish cage system 1 is not limited to the configuration shown in FIG. 1. Widths along the X-axis and Y-axis and depth along the Z-axis of the first fish cage 10, the second fish cage 20, and the path 30 may be varied as appropriate. The nets 2c and 3c do not necessarily have to hang in a rectangular shape but may hang in an arcuate shape. The path 30 need not necessarily have an open upper surface but may have a cylindrical shape.

The fish detection device 50 may be used in a system other than the fish cage system 1. That is, the fish detection device 50 may be used in other situations to detect and count fish swimming in water.

In addition, the embodiments of the present invention can be appropriately varied in various ways within the scope of the claims.

## Claims

1. A fish detection device (50), comprising:
an underwater camera system (103) configured to acquire an image of one or more fish swimming underwater;
an underwater ultrasonic system (105) configured to acquire echo data associated with the one or more fish swimming underwater;
a first fish counting module (101a) configured to detect and count fish in the image as a first count value; and
a second fish counting module (101b) configured to detect and count fish in the echo data in an occlusion region (R10) as a second count value, wherein the occlusion is caused by the detected one or more fish in the image.

2. The fish detection device (50) of claim 1, further comprising:
a fish tracking module (101c) configured to:
track each fish of the one or more fish in the image and a previously acquired image from the underwater camera system (103), and
detect a swimming direction of each fish of the one or more fish, wherein the first fish counting module (101a) increases or decreases the first count value based on the swimming direction of the one or more fish.

3. The fish detection device (50) of claim 1 or claim 2, wherein
the first fish counting module (101a) increases the first count value when at least one fish from the one or more fish is tracked as swimming in a first range of directions and decreases the first count value when the at least one fish from the one or more fish is tracked as swimming in a second range of directions, different from the first range of directions.

4. The fish detection device (50) of any of the claims 1 to 3, further comprising:
a trained processing module (101d) configured to identify corresponding fish species for each of the one or more fish detected by the first fish counting module (101a) based on the image comprising the detected one or more fish, wherein
the first fish counting module (101a) is configured to increase or decrease the first count value of the detected one or more fish based on the fish species.

5. The fish detection device (50) of any of the claims 1 to 4, further comprising:
a fish size calculating module (101e) configured to calculate a fish size corresponding to each fish of the one or more fish detected by the first fish counting module (101a) based on the image comprising the detected one or more fish; and
a fish biomass calculating module (101f) configured to calculate fish biomass based on the first count value, the second count value, and the fish size.

6. The fish detection device (50) of any of the claims 1 to 5, further comprising:
an occlusion region calculating module (101g) configured to calculate coordinates of a 3-dimensional region as the occlusion region (R10), wherein
the second fish counting module (101b) is configured to detect fish comprised within the 3-dimensional region.

7. The first detection device (50) of any of the claims 1 to 6, wherein
the underwater camera system (103) comprises at least one camera (51, 52).

8. The first detection device (50) of any of the claims 1 to 7, wherein
the underwater camera system (103) comprises a stereo camera (51, 52).

9. The first detection device (50) of any of the claims 1 to 8, wherein
the underwater ultrasonic system (105) comprises a transducer (53) comprising one or more reception transducer elements arranged in a single channel.

10. The first detection device (50) of any one of the claims 1 to 8, wherein
the underwater ultrasonic system (105) comprises a transducer (53) comprising a plurality of reception transducer elements arranged in a plurality of channels; and
the second fish counting module (101b) is configured to detect the one or more fish two-dimensionally or three- dimensionally.

11. The first detection device (50) of any of the claims 1 to 10, wherein
a lens (51a, 52a) of the underwater camera system (103) and a transducer (53) of the underwater ultrasonic system (105) are configured to face substantially in the same direction.

12. The first detection device (50) of claim 11, wherein
the same direction is the horizontal direction.

13. A fish cage system (1), comprising:
the fish detection device (50) of any of the claims 1 to 12; and
a path (30) connecting a first fish cage (10) and a second fish cage (20),
wherein
the one or more fish migrate in the path (30) from the first fish cage (10) to the second fish cage (20); and
the fish detection device (50) is configured to count the one or more fish migrating in the path (30).

14. A fish detection method, comprising:
acquiring an image of one or more fish swimming underwater;
acquiring echo data of the one or more fish swimming underwater;
detecting and counting fish in the image as a first count value; and
detecting and counting fish in the echo data in an occlusion region (R10) as a second count value, wherein the occlusion is caused by the detected one or more fish in the image.

15. A non-transitory computer-readable medium having stored thereon computer-executable instructions which, when executed by a computer, cause the computer to:
acquire an image of one or more fish swimming underwater;
acquire echo data of the one or more fish swimming underwater;
detect and count fish in the image as a first count value; and
detect and count fish in the echo data in an occlusion region (R10) as a second count value, wherein the occlusion is caused by the detected one or more fish in the image.
